# EUROPEAN PATENT APPLICATION

(11) **EP 4 303 121 A1**
(43) Date of publication of application: **10.01.2024**
(21) Application number: 23183964.8
(22) Date of filing: 06.07.2023
(51) Int. Cl.: B64C 3/44, B64C 3/48, B64C 3/52

(54) **AIRFOIL WITH FLEXIBLE TRAILING EDGE**

(30) Priority: 07.07.2022 US 202263367847 P
(71) Applicant: Bombardier Inc., Dorval QC H4S1Y9 (CA)
(72) Inventor: XI, Fengfeng, Toronto, Ontario (CA); MOOSAVIAN, Amin, Mississauga, Ontario (CA); KOJOVIC, Stefan, Oakville, Ontario (CA); EPP, Jordan, Whitby, Ontario (CA)
(74) Representative: HGF

(57) **Abstract**

Aircraft control surface includes a span-wise extending spar having at least one aperture. A displacement guide is adjacent to the aperture. A span-wise extending airfoil is mounted to the spar and extends chord-wise between leading and trailing edges. A resiliently deformable airfoil top skin is mounted to the spar via a leaf spring. The top skin is bendable relative to the spar and extends chord-wise from the spar to a top skin rear edge. A resiliently deformable airfoil bottom skin is disposed beneath the top skin. Part of the bottom skin is displaceable chord-wise through the aperture and is guidable therethrough by the displacement guide. The bottom skin extends chord-wise from the spar to a bottom skin rear edge joined to the top skin rear edge to form the airfoil trailing edge. An actuator is connected to and configured to displace the bottom skin chord-wise to displace the trailing edge.

## Description

### TECHNICAL FIELD

The disclosure relates generally to aircraft wings.

### BACKGROUND

Aircrafts are typically designed to have optimal aerodynamic characteristics at a single point in their flight envelope. For example, wing tip devices are typically used to improve aerodynamic performance at cruise and take-off. However, the altitude and the fuel loading change continuously throughout the flight, and the aircraft may often have to fly at non-optimal flight conditions. The aircraft may also operate at Mach numbers that can be significantly different from the ones used as the design condition. The resulting sub-optimal performance may affect the fuel efficiency of the aircraft.

### SUMMARY

In one aspect, there is provided an aircraft control surface, comprising: a spar extending in a span-wise direction, the spar having at least one aperture extending through the spar; a displacement guide adjacent to the at least one aperture of the spar; an airfoil mounted to the spar and extending in the span-wise direction, the airfoil extending in a chord-wise direction between a leading edge and a trailing edge, the airfoil comprising: a top skin being resiliently deformable and mounted to the spar via a leaf spring, the top skin being bendable relative to the spar, the top skin extending from the spar in the chord-wise direction to a top skin rear edge; a bottom skin being resiliently deformable and disposed beneath the top skin, part of the bottom skin being displaceable in the chord-wise direction through the at least one aperture of the spar and configured to be guided through the at least one aperture by the displacement guide, the bottom skin extending in the chord-wise direction from the spar to a bottom skin rear edge, the bottom skin rear edge joined to the top skin rear edge to form the trailing edge of the airfoil; and an actuator connected to the bottom skin and configured to displace the bottom skin in the chord-wise direction, displacement of the bottom skin causing the trailing edge to displace up or down.

The aircraft control surface as previously defined, wherein the spar is an aft spar of an aircraft wing.

The aircraft control surface as previously defined, wherein the airfoil is mounted to a main wing section of the aircraft wing or to a winglet at a tip of the aircraft wing.

The aircraft control surface as previously defined, wherein the displacement guide includes at least one roller and at least one roller guideway configured for guiding the part of the bottom skin through the at least one aperture of the spar.

The aircraft control surface as previously defined, wherein the trailing edge is tapered relative to the leading edge.

The aircraft control surface as previously defined, wherein the top skin and the bottom skin define an internal cavity of the airfoil, the internal cavity configured to vary with the displacement of the bottom skin.

The aircraft control surface as previously defined, wherein the internal cavity includes a solid trailing edge portion at the trailing edge.

The aircraft control surface as previously defined, wherein the solid trailing edge portion occupies approximately 5% of a chord length of the airfoil.

The aircraft control surface as previously defined, wherein the interior cavity includes a plurality of airfoil supports extending between the top skin and the bottom skin.

The aircraft control surface as previously defined, wherein the actuator is directly connected to at least one finger protruding from the bottom skin at the leading edge and is configured to effect displacement of the finger through the at least one aperture.

In another aspect, there is provided a winglet for an aircraft, the winglet coupled to a main wing section of an aircraft wing, the winglet comprising: a main winglet section extending between a root portion and a distal portion, the main winglet section having a forward spar and an aft spar extending through an internal cavity of the main winglet section along a span thereof, the forward and aft spars being spaced apart in a chord-wise direction at the distal portion of the main winglet section, the aft spar having at least one aperture extending through the aft spar; a displacement guide adjacent to the at least one aperture of the aft spar; an airfoil mounted to the aft spar and extending in a span-wise direction, the airfoil extending in a chord-wise direction between a leading edge and a trailing edge, the airfoil comprising: a top skin being resiliently deformable and mounted to the aft spar via a leaf spring, the top skin being bendable relative to the aft spar, the top skin extending from the aft spar in the chord-wise direction to a top skin rear edge; a bottom skin being resiliently deformable and disposed beneath the top skin, part of the bottom skin being displaceable in the chord-wise direction through the at least one aperture of the aft spar and configured to be guided through the at least one aperture by the displacement guide, the bottom skin extending in the chord-wise direction from the aft spar to a bottom skin rear edge, the bottom skin rear edge joined to the top skin rear edge to form the trailing edge of the airfoil; and an actuator connected to the bottom skin and configured to displace the bottom skin in the chord-wise direction, displacement of the bottom skin causing the trailing edge to displace up or down.

The winglet as previously defined, wherein the displacement guide includes at least one roller and at least one roller guideway configured for guiding the part of the bottom skin through the at least one aperture of the aft spar.

The winglet as previously defined, wherein the trailing edge is tapered relative to the leading edge.

The winglet as previously defined, wherein the top skin and the bottom skin define an internal cavity of the airfoil, the internal cavity configured to vary with the displacement of the bottom skin.

The winglet as previously defined, wherein the internal cavity includes a solid trailing edge portion at the trailing edge.

The winglet as previously defined, wherein the solid trailing edge portion occupies approximately 5% of a chord length of the airfoil.

The winglet as previously defined, wherein the interior cavity includes a plurality of airfoil supports extending between the top skin and the bottom skin.

The winglet as previously defined, wherein the actuator is directly connected to at least one finger protruding from the bottom skin at the leading edge and is configured to effect displacement of the at least one finger through the at least one aperture.

### BRIEF DESCRIPTION OF THE DRAWINGS

Reference is now made to the accompanying figures in which:
FIG. 1A is a perspective view of an aircraft;
FIG. 1B is a top view of a wing of the aircraft of FIG. 1A, showing internal components of the wing;
Fig. 2 is a perspective, partial cutaway view of an airfoil for the aircraft of FIG. 1A;
Fig. 3 is an exploded perspective view of an airfoil for the aircraft of FIG. 1A;
Fig. 4 is a partial cutaway view of an airfoil for the aircraft of FIG. 1A; and
Fig. 5 is a perspective view of a bottom skin for the airfoil of FIG. 4.

### DETAILED DESCRIPTION

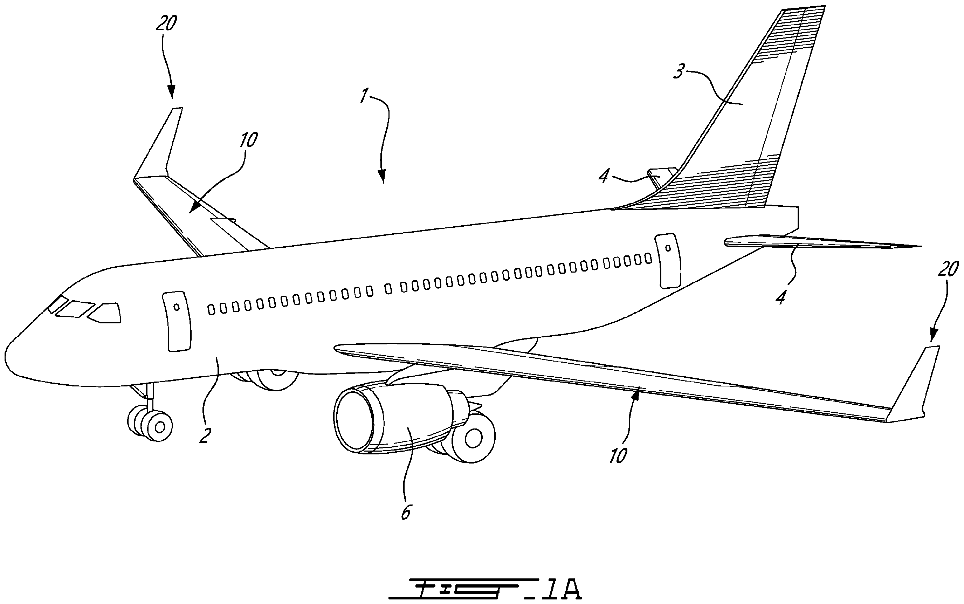

Referring to the drawings and more particularly to FIG. 1A, an aircraft is shown at 1, and is generally described to illustrate some components for reference purposes in the present disclosure. The aircraft 1 has a fuselage 2 having a fore end and an aft end, with a cabin generally located between the cockpit and the tail assembly. A tail assembly comprises a vertical stabilizer 3 with a rudder, and horizontal stabilizers 4 with elevators. The tail assembly has a fuselage-mounted tail, but other configurations may also be used for the aircraft 1, such as cruciform, T-tail, etc. Wings 10 project laterally from the fuselage 2. The aircraft 1 has engines 6 supported by the wings 10 in the depicted embodiment, although for other aircraft they can be mounted to the fuselage 2. The aircraft 1 is shown as a jet-engine aircraft, but may also be a propeller aircraft. It is also understood that the aircraft 1 can be a business aircraft, alternately it can be any other type of aircraft, manned or unmanned, including, but not limited to, a commercial aircraft or a military aircraft.

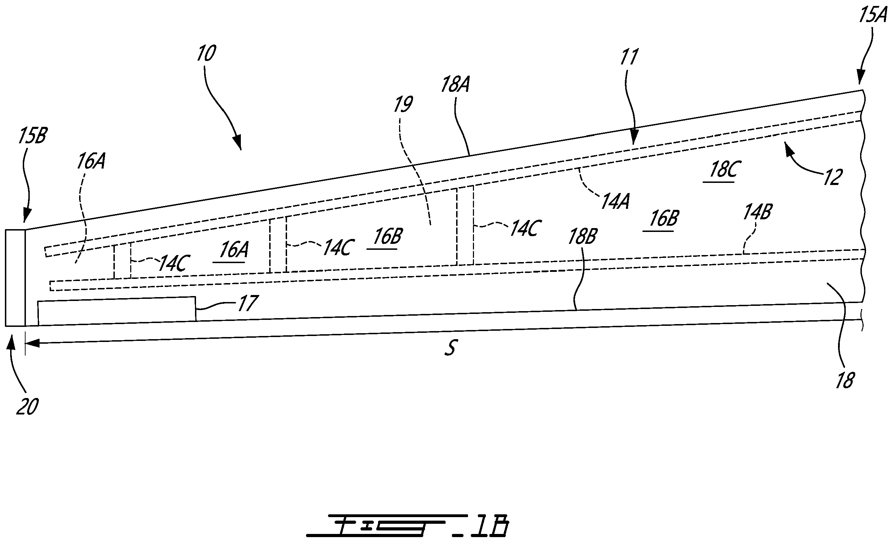

FIG. 1B shows one of the wings 10 of the aircraft 1. The wing 10 has a main wing section 11 which forms the corpus of the wing 10 and provides structure thereto. The main wing section 11 makes up the bulk of the wing 10, and is responsible for almost all of the lift produced by the wing 10. The main wing section 11 has a span S, which forms part of the wing span of the aircraft 1 in the depicted embodiment. The span S is defined between a root portion 15A of the main wing section 11 and a tip or distal portion 15B of the main wing section 11. The root portion 15A is the portion of the wing 10 closest to the fuselage 2. The distal portion 15B is the portion of the main wing section 11 located furthest from the fuselage 2. In an embodiment, the distal portion 15B is defined between a 50% position and a 100% position along the span S of the corresponding main wing section 11. In an embodiment, the distal portion 15B is defined between a 80% position and a 100% position along the span S of the main wing section 11.

Still referring to FIG. 1B, the main wing section 11 has an internal frame 12. The internal frame 12 includes any suitable interconnection of components to provide structure to the main wing section 11 so that it can support the loads acting on the wing 10 during flight of the aircraft 1. In the depicted embodiment, the internal frame 12 includes any suitable arrangement of spars, ribs, stringers, and other members. As shown in FIG. 1B, the internal frame 12 includes a front or forward spar 14A and a rear or aft spar 14B, which are interconnected by multiple transverse ribs 14C.

The main wing section 11 also includes a skin 18 which covers the internal frame 12 and provides an aerodynamic outer surface which in the depicted embodiment, helps the wing 10 to generate lift. A cross-section of the skin 18 taken in a plane transverse to the span S shows the profile of the airfoil defined by the main wing section 11 at that location along the span S. A leading edge portion 18A of the skin 18 covers the forward spar 14A, and a trailing edge portion 18B of the skin 18 covers the aft spar 14B. The wing 10 has a first or upper skin portion 18C defining an uppermost outer surface of the skin 18 and a second or lower skin portion 18D defining a lowermost outer surface of the skin 18. The skin 18 is any suitable metal or composite material, and is closed on itself such that it defines an internal cavity 19 of the wing 10 and a housing for the internal frame 12. The wing 10 may include multiple flight control surfaces (e.g. flaps, spoilers, ailerons, etc.) which may, for instance, alter or improve the aerodynamic performance of the aircraft. In FIG. 1B, the main wing section 11 includes an aileron 17 at the distal portion 15B of the main wing section 11, where the aileron 17 defines part of the trailing edge portion 18B of the main wing section 11.

Still referring to FIG. 1B, at the distal portion 15B of the main wing section 11, the forward and aft spars 14A, 14B are spaced apart to define and delimit a dry segment 16A of the internal cavity 19 of the wing 10. The internal cavity 19 is divided into dry segments 16A and wet segments 16B. The dry segments 16A are volumes of the internal cavity 19 which include components that contribute to the functioning of the wing 10, such as wiring, linkages, piping, etc. In contrast to the dry segments 16A, the wet segments 16B are volumes of the internal cavity 19 in which fuel accumulates. The wet segments 16B are enclosed volumes which form fuel tanks, and are typically positioned on the main wing section 11 closer to the root portion 15A to avoid large moments acting on the wing 10.

The dry segment 16A of the internal cavity 19 at the distal portion 15B of the main wing section 11 is a volume that is delimited vertically by the upper and lower skin portions 18C, 18D, and is delimited in the chord-wise direction by the forward and aft spars 14A, 14B. The dry segment 16A in the depicted embodiment is positioned between the 50% position and the 100% position along the span S of the main wing section 11. In an embodiment, the dry segment 16A is positioned between the 80% position and the 100% position along the span S of the main wing section 11. In FIG. 1B, the dry segment 16A delimited by the forward and aft spars 14A,14B is disposed between the leading edge portion 18A of the main wing section 11 and the aileron 17 at the distal portion 15B of the main wing section 11.

In FIG. 1B, the volume of the dry segment 16A at the distal portion 15B of the main wing section 11 is less than the volume of other dry and wet segments 16A, 16B at positions along the span S that are closer to the root portion 15A. In FIG. 1B, the volume of the dry segment 16A at the distal portion 15B of the main wing section 11 is smaller than the volume of all other dry and wet segments 16A,16B of the main wing section 11. The dry segment 16A at the distal portion 15B of the main wing section 11 is the closest of all the dry and wet segments 16A, 16B of the main wing section 11 to the tip of the wing 10. It will therefore be appreciated that the dry segment 16A of the internal cavity 19 at the distal portion 15B of the main wing section 11 is a relatively small and constrained internal volume of the main wing section 11.

FIGS. 1A and 1B also show a winglet 20 of the wing 10 that may be fixedly or moveably attached to the main wing section 11. Winglet 20 may include a main winglet section with an internal frame 12 similar to that of the main wing section 11, i.e., that includes a front or forward spar 14A and a rear or aft spar 14B, which are interconnected by multiple transverse ribs 14C. Winglet 20 may similarly extend in a span-wise direction between a winglet root and a winglet tip and have a similar outer skin surface.

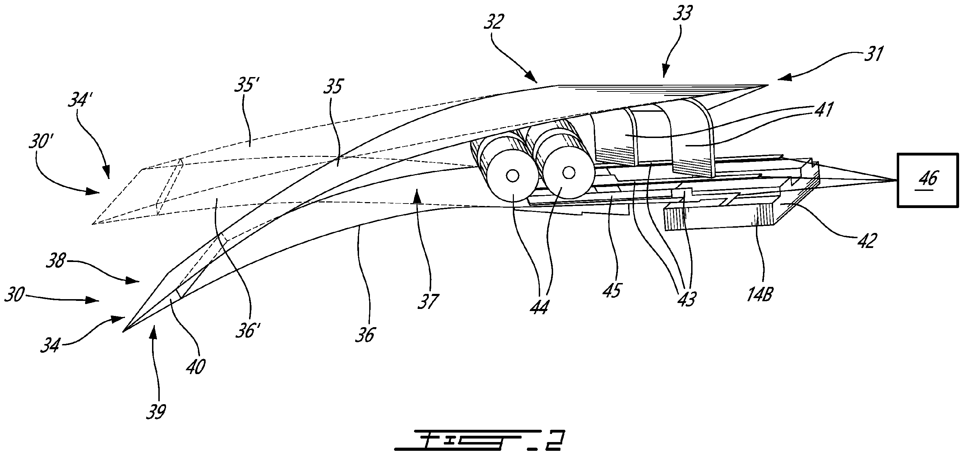

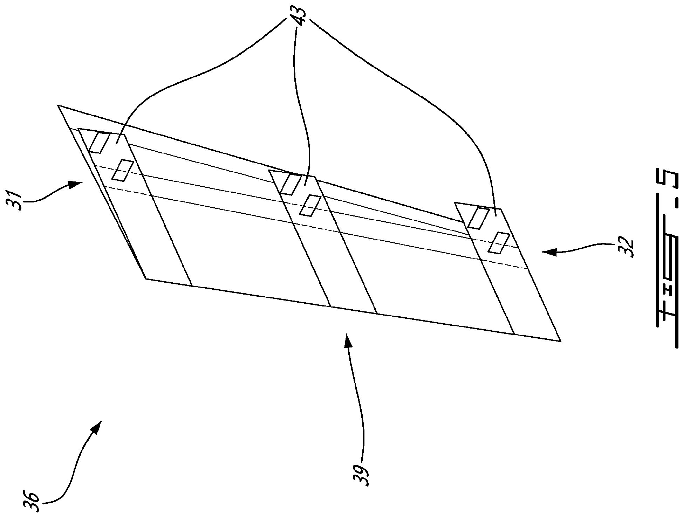

Referring to FIGS. 2-5, an airfoil 30 for aircraft 1 is shown. Airfoil 30 may, for instance, act as a control surface for the aircraft 1 (or as a portion thereof), for instance at the trailing edge of the main wing section 11 or the winglet 20. Other positions for airfoil 30 may be contemplated. In an exemplary embodiment, the airfoil 30 is joined to the winglet 20 at the aft spar 14B to act as the trailing edge of the winglet 20. In some cases, an aircraft control surface may include the airfoil 30 and adjacent components of the wing main section 11 or winglet 20 to which the airfoil 30 is mounted.

The airfoil 30 extends in a span-wise direction from an airfoil root 31 to an airfoil tip 32, and in a chord-wise direction between an airfoil leading edge 33 and an airfoil trailing edge 34. Airfoil 30 is mounted at its leading edge 33 to a spar extending in a span-wise direction through the component of the aircraft 1 to which the airfoil 30 is mounted, for instance an aft spar 14B of the main wing section 11 or of the winglet 20. The trailing edge 34 may be a tapered trailing edge 34 (i.e., its chord-wise length lessens from root 31 to tip 32). In such cases, the trailing edge 34 may not be parallel to the aft spar 14B.

The airfoil 30 includes a top skin 35 and a bottom skin 36 that define an airfoil internal cavity 37. The top skin 35, also referred to as an upper skin, extends from the aft spar 14B to a top skin rear edge 38, while the bottom skin 35, also referred to as a lower skin, extends from the aft spar 14B to a bottom skin rear edge 39. In this context, 'rear' refers to a downstream direction of fluids traveling along the airfoil 30. The top skin rear edge 38 joins the bottom skin rear edge 39 to form the airfoil trailing edge 34. In some cases, the airfoil internal cavity 37 is substantially hollow. In other cases, the airfoil internal cavity 37 is solid at the airfoil trailing edge 34. This solid trailing edge 40 may occupy, for instance, approximately 5% of a chord length of the airfoil. As will be discussed in further detail below, the top skin 35 and bottom skin 36 are resiliently deformable and the bottom skin 36 is displaceable in and out of the aft spar 14B in the chord-wise direction, thereby allowing the airfoil 30, and more particularly the airfoil trailing edge 34, to displace upwardly (when the bottom skin 36 displaces out of the aft spar 14B) and downwardly (when the bottom skin 36 displaces into the aft spar 14B).

The top skin 35 is fixedly mounted to the aft spar 14B at the airfoil leading edge 33 via one or more flexible mounts, illustratively leaf springs 41, which allow the top skin 35 to be resiliently deformable while maintaining the surface continuity on the top surface of the airfoil 30. The lead springs 41 may additionally relieve stress in the airfoil 30 by acting as a compliant joint between the top skin 35 and the aft spar 14B. By resiliently deformable, it is understood that the top skin 35 is bendable or pivotable relative to the aft spar 14B in an upward and downward direction, while also being compliant with any applicant standards for the airfoil 30 and load bearing requirements. The leaf springs 41 may take the form of slender, arc-shape lengths of spring steel (or other suitable material) of rectangular or other cross-sectional shapes. Other types of springs to mount the top skin 35 to the aft spar 14B in a similarly flexible manner may be contemplated. Other numbers of leaf springs 41 may be contemplated, for instance based on the span-wise length of the airfoil 30.

The bottom skin 36 is disposed beneath the top skin 35 and is similarly resiliently deformable. At least a portion of the bottom skin 36 is displaceable in the chord-wise direction in and out of the aft spar 14B to either extend or shorten an effective length of the lower skin 36. The effective length of the bottom skin 36 may refer to a portion of the bottom skin 36 that is exposed to the ambient air, i.e., that is not contained within the aft spar 14B. The change of length of the bottom skin 36 causes the trailing edge 34 to displace upward or downward. In other words, the trailing edge 34 may be referred to as being flexible.

In the shown embodiment, the aft spar 14B has one or more apertures 42 through which portions of the bottom skin 36 displace. For instance, the bottom skin 36 may include one or more fingers 43 (or other like members) displaceable in and out of the one or more apertures 42, the number of fingers 43 corresponding with the number of apertures 42. In the shown case, three fingers 43 are displaceable in and out of three apertures 42, although these numbers may vary, for instance based on a span-wise length of the airfoil 30 and/or an overall weight of the airfoil 30. A displacement guide, illustratively a plurality of rollers 44 and roller guideways 45, is provided adjacent the apertures 42 to guide the displacement of the fingers 43 in and out of the apertures 42. The fingers 43 roll along the rollers 44 and slide in and out of the apertures 42 via the roller guideways 45. In some cases, the roller guideways 45 may include stops to define outer limits or bounds for the displacement of the fingers 43. In the shown case, four rollers 44 are provided, while the number of roller guideways 45 (three) corresponds with the number of fingers 43 and apertures 42. Other numbers of rollers 44 and roller guideways 45 may be contemplated. Other types of displacement guides may be contemplated. In an embodiment, the fingers 43 are configured to displace in a direction perpendicularly to the aft spar 14B. In another embodiment, the fingers 43 may be configured to displace in a direction perpendicular to the tapered trailing edge 34.

In the shown case, an actuator 46 is connected to the bottom skin 36 and is configured to displace (i.e., push and pull) the bottom skin 36 in the chord-wise direction to extend or retract the bottom skin 36 relative to the aft spar 14B, thereby causing the airfoil 30, and more particularly the trailing edge 34, to displace up and down. For instance, the actuator 46 may be connected to one or more of the fingers 43 to effect their displacement in and out of the apertures 42. In some cases, a plurality of like actuators 46 may be provided, each connected to a corresponding finger 43. The actuator 46 may be connected directly to the finger(s) 43, for instance via a rod or other like connecting member, or indirectly, for instance via gearing or other linkages or cables. In some cases, the actuator 46 may be a hydraulic actuator. Other actuator types may be contemplated.

As the leaf springs 41 (or other flexible mounts) allow the top skin 35 to bend, and the bottom skin 36 displaces in and out of the aft spar 14B, neither the top skin 35 nor the bottom skin 36 stretch, contract or otherwise deform. As such, the top skin 35 and bottom skin 36 may be made from conventional skin materials such as sheet metals or composite sheets. In some embodiments, the top skin 35 and bottom skin 36 of the airfoil 30 may be made from the same material as the skin 18 of the main wing section 11 and/or winglet 20. Other materials for the top skin 35 and bottom skin 36 may be contemplated.

As the bottom skin 36 displaces in and out of the aft spar 14B, causing the airfoil 30 to bend upward or downward, a volume of the airfoil internal cavity 37 may fluctuate as well. In cases where the trailing edge 34 includes a solid trailing edge 40, the solid trailing edge 40 may maintain a constant shape as the airfoil 30 bends upward or downward. Displacement of the trailing edge 34 may, for instance, change the shape of the trailing edge 34. For instance, the chord length, camber and thickness of the trailing edge 34 may be controlled via said displacement. Various flight control requirements may dictate the displacement of the trailing edge 34. Actuation of the actuator 46 may be done manually, for instance by the pilot of the aircraft 1. Additionally or alternatively, the actuation process for the actuator 46 may be automated, for instance to displace the trailing edge 34 based on the flight stage and/or ambient conditions.

Referring to FIG. 2, the airfoil 30 is shown in a bent or deformed state. In particular, the airfoil 30 is shown with the trailing edge 34 bent in a downward direction, resulting from the bottom skin 36 being displaced by the actuator 46 into the aft spar 14B and the top skin 35 extending the leaf springs 41, thereby lowering the trailing edge 34. This is in relation to a neutral or unbent airfoil 30', also shown in FIG. 2. The bottom skin 36' of unbent airfoil 30' is at a position with reference to the aft spar 14B such that the top skin 35' is in an unbent state. Stated differently, the top skin 35' neither compresses nor extends the lead springs 41 while in its unbent state. In some cases, the unbent airfoil 30' may extend in a substantially parallel direction as the component to which it is mounted, for instant the main wing section 11 or the winglet 20. When the actuator 46 displaces the bottom skin 36 further outward of the aft spar 14B, the top skin 35 compresses the leaf springs 41 and bends upwardly, with the trailing edge 34 positioned higher than the trailing edge 34' in its unbent state.

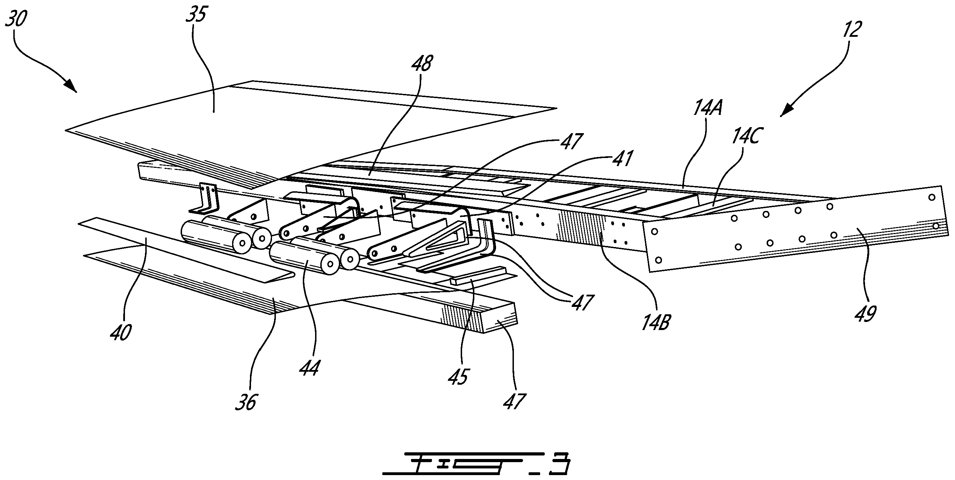

Referring to FIG. 3, additional hardware may be provided to support and/or connect the airfoil 30 to the aft spar 14B. For instance, various supporting members 47 may be provided to support the airfoil 30. A leaf spring connecting plate 48 may be provided to couple the lead springs 41 to the aft spar 14B. An additional connecting plate 49 may be provided for joining the internal frame 12 to which the airfoil 30 is connected to another portion of the aircraft wing 10.

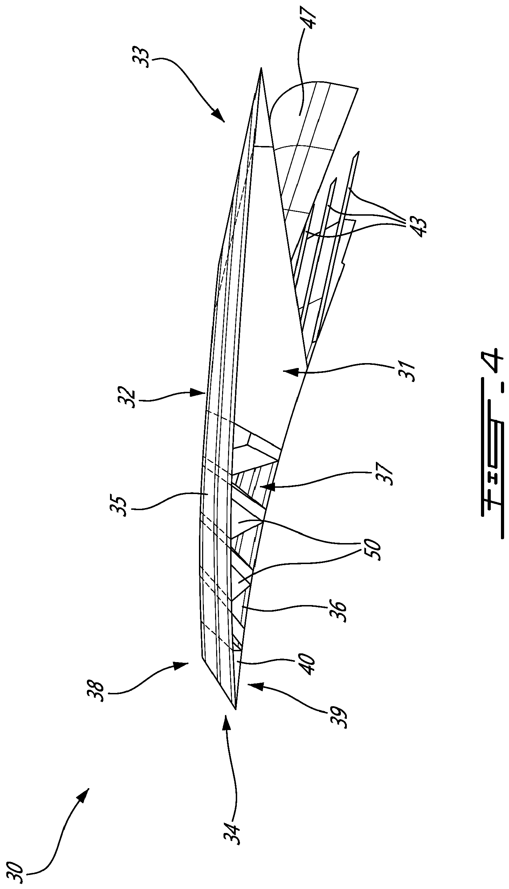

Referring to FIG. 4, in some cases, the airfoil internal cavity 37 includes a plurality of airfoil supports 50 extending between the top skin 35 and the bottom skin 36. In the shown case, the supports extend across a span-wise length of the airfoil 30 and are spaced apart from one another in a chord-wise direction between the airfoil leading edge 33 and the airfoil trailing edge 34, illustratively the solid trailing edge 40. These supports 50 may provide additional stiffness to the airfoil. The number, spacing and stiffness of supports 50 may vary, for instance based on the weight of the airfoil 30. Other supporting means for airfoil 30 may be contemplated. Various combinations for internal cavities 37 with hollow spaces, various supports 50 and solid trailing edge 40 may be contemplated.

The embodiments described in this document provide non-limiting examples of possible implementations of the present technology. Upon review of the present disclosure, a person of ordinary skill in the art will recognize that changes may be made to the embodiments described herein without departing from the scope of the present technology. Yet further modifications could be implemented by a person of ordinary skill in the art in view of the present disclosure, which modifications would be within the scope of the present technology.

## Claims

1. An aircraft control surface, comprising:
a spar (14B) extending in a span-wise direction, the spar (14B) having at least one aperture (42) extending through the spar (14B);
a displacement guide adjacent to the at least one aperture (42) of the spar (14B);
an airfoil (30) mounted to the spar (14B) and extending in the span-wise direction, the airfoil (30) extending in a chord-wise direction between a leading edge and a trailing edge, the airfoil (30) comprising:
a top skin (35) being resiliently deformable and mounted to the spar (14B) via a leaf spring, the top skin (35) being bendable relative to the spar (14B), the top skin (35) extending from the spar (14B) in the chord-wise direction to a top skin rear edge (38);
a bottom skin (36) being resiliently deformable and disposed beneath the top skin (35), part of the bottom skin (36) being displaceable in the chord-wise direction through the at least one aperture (42) of the spar (14B) and configured to be guided through the at least one aperture (42) by the displacement guide, the bottom skin (36) extending in the chord-wise direction from the spar (14B) to a bottom skin rear edge (39), the bottom skin rear edge (39) joined to the top skin rear edge (38) to form the trailing edge of the airfoil (30); and
an actuator (46) connected to the bottom skin (36) and configured to displace the bottom skin (36) in the chord-wise direction, displacement of the bottom skin (36) causing the trailing edge to displace up or down.

2. The aircraft control surface as defined in claim 1, wherein the spar (14B) is an aft spar (14B) of an aircraft wing (10).

3. The aircraft control surface as defined in claim 2, wherein the airfoil (30) is mounted to a main wing section (11) of the aircraft wing (10) or to a winglet (20) at a tip of the aircraft wing (10).

4. The aircraft control surface as defined in claim 1, wherein the displacement guide includes at least one roller (44) and at least one roller guideway (45) configured for guiding the part of the bottom skin (36) through the at least one aperture (42) of the spar.

5. The aircraft control surface as defined in claim 1, wherein the trailing edge is tapered relative to the leading edge.

6. The aircraft control surface as defined in claim 1, wherein the top skin (35) and the bottom skin (36) define an internal cavity (19) of the airfoil (30), the internal cavity (19) configured to vary with the displacement of the bottom skin (36).

7. The aircraft control surface as defined in claim 6, wherein the internal cavity (19) includes a solid trailing edge portion at the trailing edge.

8. The aircraft control surface as defined in claim 7, wherein the solid trailing edge portion occupies approximately 5% of a chord length of the airfoil (30).

9. The aircraft control surface as defined in claim 6, wherein the interior cavity includes a plurality of airfoil supports (50) extending between the top skin (35) and the bottom skin (36).

10. The aircraft control surface as defined in claim 1, wherein the actuator (46) is directly connected to at least one finger (43) protruding from the bottom skin (36) at the leading edge and is configured to effect displacement of the finger (43) through the at least one aperture (42).

11. A winglet (20) for an aircraft, the winglet (20) coupled to a main wing section (11) of an aircraft wing (10), the winglet (20) comprising:
a main winglet section extending between a root portion and a distal portion, the main winglet section having a forward spar (14A) and an aft spar (14B) extending through an internal cavity (19) of the main winglet section along a span thereof, the forward (14A) and aft (14B) spars being spaced apart in a chord-wise direction at the distal portion of the main winglet section, the aft spar (14B) having at least one aperture (42) extending through the aft spar (14B);
a displacement guide adjacent to the at least one aperture (42) of the aft spar (14B);
an airfoil (30) mounted to the aft spar (14B) and extending in a span-wise direction, the airfoil (30) extending in a chord-wise direction between a leading edge and a trailing edge, the airfoil (30) comprising:
a top skin (35) being resiliently deformable and mounted to the aft spar (14B) via a leaf spring, the top skin (35) being bendable relative to the aft spar (14B), the top skin (35) extending from the aft spar (14B) in the chord-wise direction to a top skin rear edge (38);
a bottom skin (36) being resiliently deformable and disposed beneath the top skin (35), part of the bottom skin (36) being displaceable in the chord-wise direction through the at least one aperture (42) of the aft spar (14B) and configured to be guided through the at least one aperture (42) by the displacement guide, the bottom skin (36) extending in the chord-wise direction from the aft spar (14B) to a bottom skin rear edge (39), the bottom skin rear edge (39) joined to the top skin rear edge (38) to form the trailing edge of the airfoil (30); and
an actuator (46) connected to the bottom skin (36) and configured to displace the bottom skin (36) in the chord-wise direction, displacement of the bottom skin (36) causing the trailing edge to displace up or down.

12. The winglet (20) as defined in claim 11, wherein the displacement guide includes at least one roller (44) and at least one roller guideway (45) configured for guiding the part of the bottom skin (36) through the at least one aperture (42) of the aft spar (14B).

13. The winglet (20) as defined in claim 11, wherein the trailing edge is tapered relative to the leading edge.

14. The winglet (20) as defined in claim 11, wherein the top skin (35) and the bottom skin (36) define an internal cavity (19) of the airfoil (30), the internal cavity (19) configured to vary with the displacement of the bottom skin (36).

15. The winglet (20) as defined in claim 14, wherein the internal cavity (19) includes a solid trailing edge portion at the trailing edge.
